# EUROPÄISCHE PATENTSCHRIFT

(11) **EP 2 484 934 B1**
(45) Veröffentlichungstag und Bekanntmachung des Hinweises auf die Patenterteilung: **10.04.2013**
(21) Anmeldenummer: 11188416.9
(22) Anmeldetag: 09.11.2011
(51) Int. Cl.: F16H 1/48, F16H 57/08

(54) **Baugruppe umfassend ein Planetengetriebe**
Component group comprising a planetary gear
Ensemble comprenant un engrenage planétaire

(30) Priorität: 08.02.2011 DE 102011003765
(43) Veröffentlichungstag der Anmeldung: 08.08.2012
(73) Patentinhaber: Schaeffler Technologies AG & Co. KG, 91074 Herzogenaurach (DE)
(72) Erfinder: Jurjanz, Ramon, 91058 Erlangen (DE); Ohr, Carsten, 91242 Ottensoos (DE); Wurzberger, Philip, 90429 Nürnberg (DE)

(56) Entgegenhaltungen:
- WO-A1-00/11372
- WO-A1-2010/072188
- US-A- 5 928 105
- US-A1- 2010 236 848

## Beschreibung

Die Erfindung betrifft eine Baugruppe eines Planetengetriebes mit einer ersten Unterbaugruppe, wobei die Unterbaugruppe einen Planetenträger und mindestens einen ersten Planetensatz sowie ein eine Axialachse definierendes Sonnenrad umfasst, wobei der erste Planetensatz an dem Planetenträger auf einer Montageseite der ersten Unterbaugruppe gelagert ist, und mit einer zweiten Unterbaugruppe, wobei die zweite Unterbaugruppe auf der Montageseite der ersten Unterbaugruppe angeordnet ist.

Planetengetriebe werden z. B. bei Kraftfahrzeugen mittlerweile u. a. als Achsdifferentiale zur Verteilung des Antriebsdrehmoments auf zwei angetriebene Räder oder als Längsdifferentiale zur Verteilung eines Antriebsdrehmoments auf zwei verschiedene Achsen eingesetzt. Die Planetengetriebe umfassen bei diesen Ausführungsformen üblicher Weise nicht nur einen Planetentrieb, sondern sind mehrstufig ausgebaut, so dass das Planetengetriebe mehrere Planetensätze, Planetenträger bzw. Sonnenräder aufweist.

Aufgrund der Komplexität derartiger Planetengetriebe wurde eine Vielzahl von konstruktiven Umsetzungen vorgeschlagen. So offenbart die Druckschrift DE102005001832A1, ein Automatgetriebe, insbesondere für Kraftfahrzeuge, welches mindestens einen Planetenträger aufweist. Der Planetenträger dient zur Lagerung von Planetenrädern eines Planetensatzes und ist aus zwei Blechteilen aufgebaut. Auf den Planetenträger kann eine Stauscheibe bzw. ein Ölfangblech als Komponenten mit zusätzlichen Funktionen aufgesteckt und verriegelt werden.

Die Druckschriften US 2010/0236848A1 und WO00/11372 A1 zeigen jeweils weitere Ausführungsformen von Planetengetrieben.

Die Druckschrift WO2090/072188 A1, die den nächstkommenden Stand der Technik bildet, offenbart ein Planetengetriebe, welches in einer Ausführungsform gemäß Figur 6 einen ersten und einen zweiten Unterbaugruppenabschnitt aufweist, wobei der zweite Unterbaugruppenabschnitt auf einer Kopplungsseite des ersten Unterbaugruppenabschnitts angeordnet ist. Der erste Unterbaugruppenabschnitt umfasst einen Planetenträger und einen Planetensatz sowie ein eine Axialachse definierendes Sonnenrad. Der Planetensatz des ersten Unterbaugruppenabschnitts ist der zweiten Unterbaugruppe zugewandt und befindet sich dementsprechend ebenfalls auf der Kopplungsseite des ersten Unterbaugruppenabschnitts.

Der Erfindung liegt die Aufgabe zugrunde, eine Baugruppe eines Planetengetriebes weiter zu entwickeln, so dass eine vereinfachte Montage des Planetengetriebes ermöglicht wird.

Diese Aufgabe wird durch die Baugruppe mit den Merkmalen des Anspruches 1 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird somit eine Baugruppe eines Planetengetriebes vorgeschlagen, wobei das Planetengetriebe bevorzugt zur Integration in ein Kraftfahrzeug geeignet und/oder ausgebildet ist. Optional umfasst die Baugruppe das gesamte Planetengetriebe. Besonders bevorzugt ist das Planetengetriebe als Differentialgetriebe, insbesondere ein Achsdifferential oder ein Längsdifferential, oder ein Ravigneaux-Satz ausgebildet. In diesen Ausgestaltungen dient es insbesondere zur Übersetzung, Untersetzung und/oder Verteilung eines Antriebsdrehmoments des Fahrzeugs.

Die Baugruppe umfasst eine erste Unterbaugruppe, welche eine Mehrzahl von Einzelkomponenten aufweist. So umfasst die erste Unterbaugruppe einen Planetenträger und mindestens einen ersten Planetensatz mit mehreren Planetenrädern sowie ein Sonnenrad, welches vorzugsweise mit den Planetenrädern des ersten Planetensatzes kämmt. Zum Zwecke der Offenbarung definiert das Sonnenrad mit seiner Drehachse eine Axialachse. Der erste Planetensatz ist an dem Planetenträger auf einer Montageseite der ersten Unterbaugruppe gelagert. Beispielsweise weist die erste Unterbaugruppe eine Mehrzahl von Planetenbolzen auf, die auf der Montageseite der ersten Unterbaugruppe an dem Planetenträger festgelegt sind. Bei einer möglichen konstruktiven Ausgestaltung umfasst der Planetenträger auf der Montageseite der ersten Unterbaugruppe eine Seitenscheibe oder einen Seitenring über die die Planetenräder des ersten Planetensatzes gelagert sind.

Die Baugruppe umfasst mindestens eine zweite Unterbaugruppe, welche auf der Montageseite der ersten Unterbaugruppe angeordnet ist und mit der ersten Unterbaugruppe verbunden ist. Die zweite Unterbaugruppe kann ein- oder mehrteilig ausgebildet sein.

Im Rahmen der Erfindung wird vorgeschlagen, dass die zweite Unterbaugruppe als eine Deckelkonstruktion ausgebildet ist, welche das Sonnenrad der ersten Unterbaugruppe in axialer Richtung insbesondere formschlüssig sichert. Somit wird das Sonnenrad - gegebenenfalls unter Zwischenschaltung von weiteren Komponenten - durch die zweite Unterbaugruppe verliersicher gehalten.

Der Vorteil der Erfindung ist darin zu sehen, dass bei der Montage der Baugruppe das Sonnenrad in die erste Unterbaugruppe eingesetzt werden kann und mittels der zweiten Unterbaugruppe verliersicher gehalten wird. Bei der weiteren Montage des Planetengetriebes ist durch diese Konstruktion ein Herausfallen des Sonnenrads ausgeschlossen, so dass die Montage des Planetengetriebes vereinfacht ist bzw. mögliche, daraus resultierende Fehler ausgeschlossen sind.

Besonders bevorzugt ist es, dass die Baugruppe als eine selbsthaltende Baugruppe ausgebildet ist, wobei diese nach dem Verbinden der ersten und der zweiten Unterbaugruppe nicht mehr auseinander fällt und/oder nicht werkzeugfrei demontierbar ist. Diese Weiterbildung unterstützt nochmals den erfinderischen Gedanken, die Baugruppe so zu gestalten, dass diese in einem weiteren Montageschritt problemlos montiert und gegebenenfalls bei Reparaturen einfach ausgetauscht werden kann.

Die zweite Baugruppe weist frei abstehende Flanschsegmente, insbesondere Laschen, auf, über die die zweite und die erste Unterbaugruppe miteinander verbunden sind. Insbesondere sind die Flanschsegmente in Umlaufrichtung um die Axialachse voneinander beabstandet angeordnet. Die Anzahl der Flanschsegmente kann gering gehalten werden, so dass 6 oder weniger, vorzugsweise 5 oder weniger und insbesondere 4 Flanschsegmente zum Einsatz kommen. Die Flanschsegmente erstrecken sich bevorzugt jeweils in einem Kreissektor ("Tortenstück") mit einem eingeschlossenen Winkel kleiner als 35°, vorzugsweise kleiner als 25° und insbesondere kleiner 20°. Die Flanschsegmente nehmen somit nur einen geringen Teil in der Umfanglänge um die Axialachse ein.

Bei einer bevorzugten Weiterbildung der Erfindung erstrecken sich die Flanschsegmente in einer Radialebene zu der Axialachse. Besonders bevorzugt erstreckt sich eine Anlagefläche der Flanschsegmente an die erste Unterbaugruppe in der genannten Radialebene.

Bei erfindungsgemäßen einer besonders kompakten Ausführungsform sind die freien Enden der Flanschsegmente zwischen den Planetenrädern des ersten oder gegebenenfalls ergänzenden Planetensätzen der ersten Unterbaugruppe angeordnet. Durch die Flanschsegmente werden somit die Lücken zwischen den Planetenrädern ausgenutzt, so dass ein kompaktes Design erreicht wird. Besonders bevorzugt weist die erste Unterbaugruppe im Bereich dieser Lücken Stege auf, welche sich in axialer Richtung z.B. über mindestens 50 % des Durchmessers in axialer Richtung der ersten Unterbaugruppe erstrecken und auf denen die Flanschsegmente aufliegen.

Bei einer bevorzugten Weiterbildung der Erfindung ist die erste Unterbaugruppe zur formschlüssigen Aufnahme der Flanschsegmente bezüglich einer Umlaufrichtung der Axialachse und/oder bezüglich einer Radialrichtung zu der Axialachse ausgebildet. Die formschlüssige Aufnahme blockiert somit eine Drehung der ersten Unterbaugruppe, relativ zur zweiten Unterbaugruppe, in Umlaufrichtung um die Axialachse und/oder blockiert ein Verschieben der ersten Unterbaugruppe relativ zur zweiten Unterbaugruppe in radialer Richtung zu der Axialachse. Der Vorteil der formschlüssigen Aufnahme ist auch in einer Zentrierung der ersten Unterbaugruppe relativ zu der zweiten Unterbaugruppe bei der Montage der Baugruppe zu sehen. Die formschlüssige Aufnahme kann beispielsweise als eine Mehrzahl von Ausnehmungen in der ersten Unterbaugruppe ausgebildet sein, welche die Flanschsegmente formschlüssig umschließen oder umlaufen.

Bei einer besonders bevorzugten Ausführungsform der Erfindung sind die erste und die zweite Unterbaugruppe miteinander über die Flanschsegmente lösbar verbunden. Insbesondere ist die Verbindung zerstörungsfrei lösbar ausgebildet. Diese Ausgestaltung hat den Vorteil, dass zum Beispiel bei einer Reparatur die erste und die zweite Unterbaugruppe in einfacher Weise voneinander getrennt werden können.

Bei einer ersten möglichen Ausgestaltung der Erfindung sind die Flanschsegmente an einem gemeinsamen Trägerteil der zweiten Unterbaugruppe einstückig ausgebildet. Bei einer anderen Ausführungsform sind die Flanschsegmente jedoch als separate Bauteile in der zweiten Unterbaugruppe realisiert. In diesem Fall können die Flanschsegmente zum Beispiel als Schraubenlaschen ausgebildet sein, welche in die erste Unterbaugruppe eingeschraubt werden und welche jeweils ein Klemmende aufweisen, das die zweite Unterbaugruppe klemmt.

In einer konkreten Ausgestaltung der Flanschsegmente weise diese auf einer ersten Seite eine Durchführung für eine Schraube und auf der gegenüberliegenden Seite einen Absatz oder eine andere mechanische Schnittstelle zur formschlüssigen Anlage an einer Kante der zweiten Unterbaugruppe auf, so dass die zweite Unterbaugruppe an die erste Unterbaugruppe angeklemmt werden kann.

Bei anderen Ausführungsformen können die Flanschsegmente auch der ersten Unterbaugruppe zugeordnet sein und beispielsweise als Schieber ausgebildet sein, welche in radialer Richtung auf der ersten Unterbaugruppe verschiebbar angeordnet sind, wobei die Flanschsegmente in einer ersten Position die zweite Unterbaugruppe freigeben und in einer zweiten Position, in der sie in radialer Richtung bezüglich der ersten Position verschoben sind, in die zweite Unterbaugruppe eingreifen oder diese übergreifen und in axialer Richtung zu der Axialachse formschlüssig sichern. Bei wieder anderen Ausführungsformen können die Flanschsegmente ebenfalls der ersten Unterbaugruppe zugeordnet sein und drehbar oder schwenkbar in der ersten Unterbaugruppe angeordnet sein. Bei dieser Ausführungsform geben die Flanschsegmente in einer ersten Position, in der sie tangential zu der Axialachse ausgerichtet sind, die zweite Unterbaugruppe frei und sichern die zweite Unterbaugruppe in einer zweiten Position, wobei die Flanschsegmente radial zu der Axialachse ausgerichtet sind und in die zweite Unterbaugruppe eingreifen oder diese übergreifen.

Bei einer möglichen Weiterbildung der Erfindung umfasst die zweite Baugruppe einen weiteren Planetenträger und einen weiteren Planetensatz, wobei der der weitere Planetensatz in dem weiteren Planetenträger gelagert ist. Damit ist die zweite Unterbaugruppe ebenfalls als ein Abschnitt eines Planetentriebs realisiert. In dieser Ausgestaltung kann beispielsweise die erste Unterbaugruppe einem Differentialgetriebe und die zweite Unterbaugruppe einem Überlagerungsgetriebe, wie es beispielsweise bei der Umsetzung eines Torque-Vectoring umgesetzt wird, zugeordnet sein. Alternativ kann die Baugruppe auch Teil eines Ravigneaux-Getriebes darstellen.

In einer möglichen Realisierung kann vorgesehen sein, dass jeder beliebige der Planetenträger einstückig und/oder aus Vollmaterial und/oder als ein Gussteil ausgebildet ist. Als Material kann z.B. eine Aluminium- oder Stahlverbindung eingesetzt werden. In dieser Ausgestaltung ist die Baugruppe besonders einfach zu montieren, da der erste Planetenträger einen Grundkörper für die erste Unterbaugruppe bildet, in den der Planetensatz und das Sonnenrad eingesetzt werden kann und welcher dann mit dem weiteren Planetenträger der zweiten Unterbaugruppe als weiteren Grundkörper verbunden wird, so dass das Sonnenrad vor einem Herausfallen gesichert ist.

Optional ergänzend kann vorgesehen sein, dass die zweite Unterbaugruppe ein weiteres Sonnenrad aufweist, wobei das weitere Sonnenrad in der zweiten Unterbaugruppe drehbar angeordnet, insbesondere gelagert ist und mit den Planetenrädern der zweiten Unterbaugruppe kämmt.

In einer weiteren möglichen Ausgestaltung der Erfindung weist die erste Unterbaugruppe zwei unterschiedliche Planetensätze auf, wobei die Anzahl der Planetenräder in beiden Planetensätzen gleich ist und die Planetenräder der verschiedenen Planetensätze jeweils paarweise zueinander angeordnet sind, so dass zwischen den Paaren der Planetenräder jeweils eine Lücke vorhanden ist. Besonders bevorzugt erstrecken sich die Flanschsegmente in die Lücken zwischen den Planetenpaaren.

Weitere Merkmale, Vorteile und Wirkungen der Erfindung ergeben sich aus der nachfolgenden Beschreibung eines bevorzugten Ausführungsbeispiels der Erfindung. Dabei zeigen:
Figur 1 eine schematische dreidimensionale Darstellung der ersten Unterbaugruppe einer Baugruppe als Ausführungsbeispiel der Erfindung;
Figur 2 in gleicher Darstellung einen Teil der zweiten Unterbaugruppe der Baugruppe;
Figur 3 in gleicher Darstellung wie die vorhergehenden Figuren die Baugruppe mit der ersten und zweiten Unterbaugruppe als ein Ausführungsbeispiel der Erfindung;
Figuren 4 a, b die zweite Unterbaugruppe in Detailansicht und in Explosionsdarstellung;
Figur 5 einen Schnitt durch die Baugruppe als ein Ausführungsbeispiel der Erfindung.

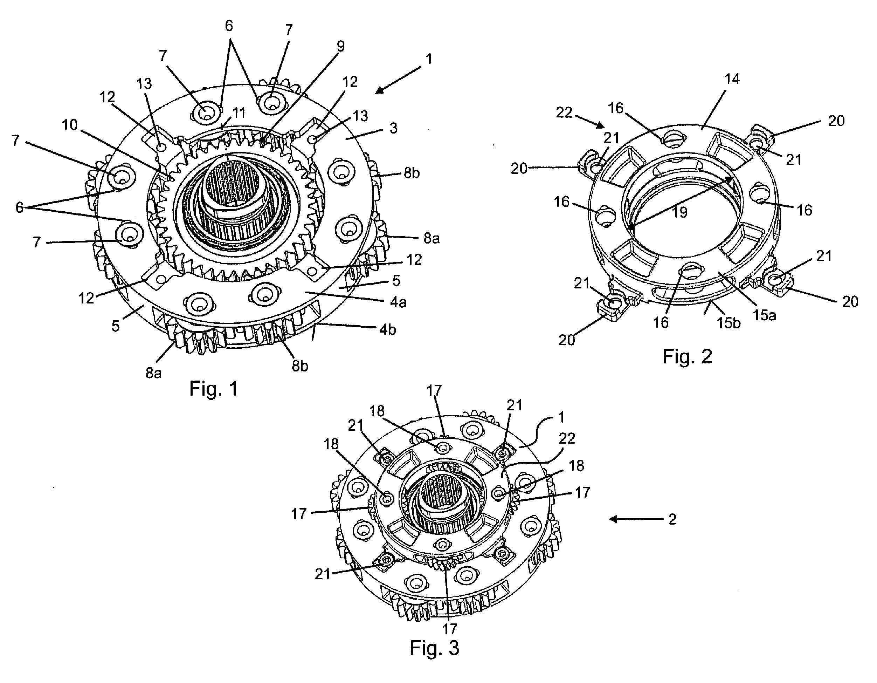

Die Figur 1 zeigt in einer schematischen dreidimensionalen Darstellung eine erste Unterbaugruppe 1 einer Baugruppe 2 (Figur 3), welche ein Ausführungsbeispiel der Erfindung repräsentiert. Die Baugruppe 2 ist als eine selbsthaltende, montagefertige Baugruppe ausgebildet und bildet den Teil eines Planetengetriebes für ein Kraftfahrzeug, insbesondere zur Verteilung des Antriebsdrehmoments.

Die Unterbaugruppe 1 ist als eine Differentialstufe ausgebildet und weist einen ersten Planetenträger 3 auf, welcher einstückig ausgebildet ist und aus einem Vollmaterial besteht. Der Planetenträger 3 kann beispielsweise über urformende Verfahren oder abtragenden Verfahren oder eine Kombination davon produziert sein. Insbesondere kann der Planetenträger 3 gegossen oder gefräst sein. Der Planetenträger 3 umfasst jeweils stirnseitig einen ersten Seitenring 4 a und gegenüberliegend einen zweiten Seitering 4 b, welche über Stege 5 einstückig miteinander verbunden sind. In den Seitenringen 4 a, b sind Bolzenaufnahmen 6 zur Aufnahme von Planetenbolzen 7 eingebracht. Zwischen den Seitenringen 4 a, b sind zwei Planetensätze mit Planetenrädern 8 a, b drehbar angeordnet und über die Planetenbolzen 7 in dem Planetenträger 3 gelagert. Die Planetenräder 8 a, b sind dabei so verteilt, dass die Stege 5 jeweils in einer Lücke zwischen einem Paar eines Planetenrads 8 a des ersten Planetensatzes und eines Planetenrades 8 b des zweiten Planetensatzes angeordnet sind.

Mittig weist der Planetenträger 3 eine zentrale Montageöffnung 9 auf, durch die ein erstes Sonnenrad 10 in den Planetenträger 3 eingeführt werden kann, wobei das erste Sonnenrad 10 in der Endposition mit den Planetenrädern 8 b kämmt. Die Montageöffnung 9 muss somit mindestens gleich groß oder größer als das Sonnenrad 10 ausgebildet sein.

In Umlaufrichtung um eine Axialachse 11, welche durch die Drehachse des ersten Sonnenrades 10 definiert wird, sind Flanschaufnahmen 12 angeordnet, die als Ausnehmungen realisiert sind. Die Grund- oder Bodenfläche der Flanschaufnahmen 12 werden durch die Stege 5 gebildet, so dass die Flanschaufnahmen 12 zwischen den Paaren der Planetenräder 8 a, b angeordnet sind. In der Draufsicht weisen die Flanschaufnahmen 12 in dem geschlossenen radialen Endbereich eine rechteckige Grundform auf, welche sich zum ersten Sonnenrad 10 bzw. zu der Montageöffnung 9 über einen Absatz öffnet. Im Boden der Flanschaufnahmen 12 sind Gewindebohrungen 13 für Schrauben vorgesehen.

Die Figur 2 zeigt eine schematische dreidimensionale Ansicht eines Grundkörpers in Form eines weiteren Planetenträgers 14 einer zweiten Unterbaugruppe 22. Der weitere Planetenträger 14 ist ebenfalls aus einem Vollmaterial hergestellt und kann wie der Planetenträger 3 urgeformt oder durch abtragende Verfahren, insbesondere durch Gießen oder Fräsen hergestellt sein. Der weitere Planetenträger 14 umfasst weitere Seitenringe 15 a, b, welche weitere Bolzenaufnahmen 16 zeigen, so dass zwischen den weiteren Seitenringen 15 a, b weitere Planetenräder 17 (Figur 3) über weitere Bolzen 18 drehbar gelagert sind.

Der Außendurchmesser des weiteren Planetenträgers 14 ist etwas größer als der freie Innendurchmesser der Montageöffnung 9 bemessen, so dass die zweite Unterbaugruppe 22 auf die erste Unterbaugruppe 1 aufgesetzt werden kann. Insbesondere können die Stege 5 eine Auflagefläche für den weiteren Planetenträger 14 bilden, die den freien Innendurchmesser der Montageöffnung verkleinert. Der freie Innendurchmesser 19 des weiteren Planetenträgers 14 und damit der zweiten Unterbaugruppe 22 ist jedoch kleiner bemessen als der Außendurchmesser des ersten Sonnenrads 10, so dass dieses durch den weiteren Planetenträger 14 bzw. die Unterbaugruppe 15 verliersicher in der ersten Unterbaugruppe 1 gehalten bzw. eingesperrt ist.

Zur Befestigung des zweiten Unterbaugruppe 22, insbesondere des weiteren Planetenträgers 14 an der ersten Unterbaugruppe 1 sind Flanschsegmente 20 vorgesehen, die radial von dem weiteren Planetenträger 14 abstehend angeordnet sind und jeweils eine Durchgangsöffnung 21 zur Durchführung von Schrauben aufweisen, die dann in die Gewindebohrungen 13 eingeschraubt werden können. Die Kontur der Flanschsegmente 20 ist korrespondierend bzw. komplementär zu der Kontur der Flanschaufnahmen 12 ausgebildet, so dass die Flanschsegmente 20 durch die Flanschaufnahmen 12 in Umlaufrichtung und in radialer Richtung formschlüssig gehalten werden.

Die Figur 3 zeigt die erste Unterbaugruppe 1 und die zweite Unterbaugruppe 22 in zusammengeschraubtem Zustand, wobei - in Abgrenzung zu der Figur 2 - nun Bolzen 18 und Planetenräder 17 in dem weiteren Planetenträger 14 eingesetzt sind. Der weitere Planetenträger 14 ist nun in der Montageöffnung 9 eingesetzt und die Flanschsegmente 20 liegen versenkt in den Flanschaufnahmen 12 und sind über Schrauben 21 fixiert. Die gezeigte Baugruppe 2 ist in dieser Form als eine selbsthaltende Baugruppe ausgebildet, die in nachfolgenden Montageschritten in einfacher Weise montiert, insbesondere ein- oder ausgebaut und/oder repariert werden kann.

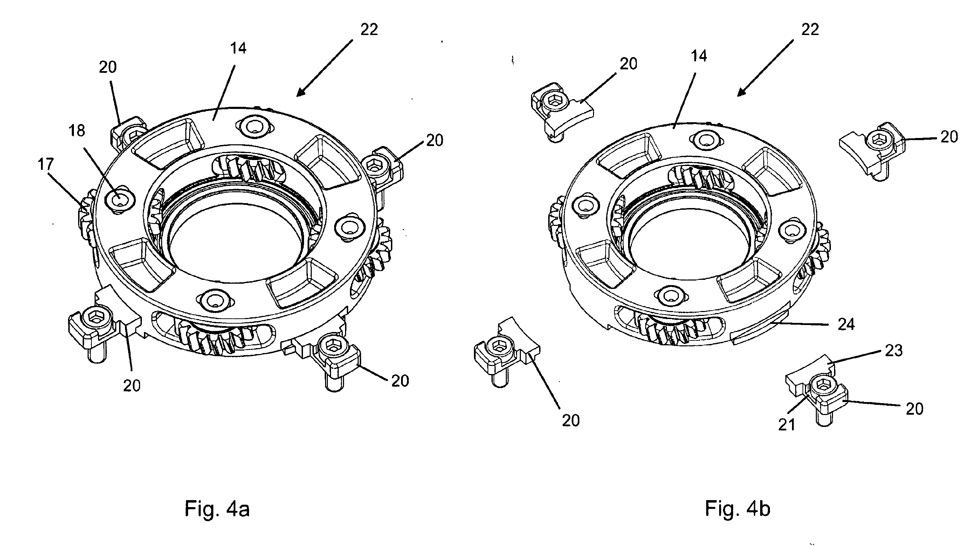

Die Figuren 4 a und 4 b zeigen nochmals die zweite Unterbaugruppe 22, wie in der Figur 2, jedoch mit eingesetzten Planetenrädern 17 und Bolzen 18. Besonders hinzuweisen sind auf die Flanschsegmente 20, welche in der Ausführungsform in der Figur 2 zumindest teilweise oder alle einstückig an dem weiteren Planetenträger 14 angeordnet oder angeformt sind. In der Ausführungsform der Figuren 4 a, b sind diese jedoch als separate Bauteile ausgebildet. Bei der Montage wird somit zunächst die zweite Unterbaugruppe 22 auf die erste Unterbaugruppe 1 aufgesetzt und dann die Flanschsegmente 20 eingesetzt.

Die Flanschsegmente 20 weisen einen Schraubenbereich mit der Durchgangsöffnung 21 sowie einen Klemmbereich 23 auf, welcher in einen korrespondieren ausgebildeten Kantenbereich 24 des weiteren Planetenträgers 14 eingreift, um diesen bei der Montage in axialer Richtung zu klemmen. Der Kantenbereich 24 ist dabei als ein Absatz ausgebildet, welcher von dem Klemmbereich 23 übergriffen wird.

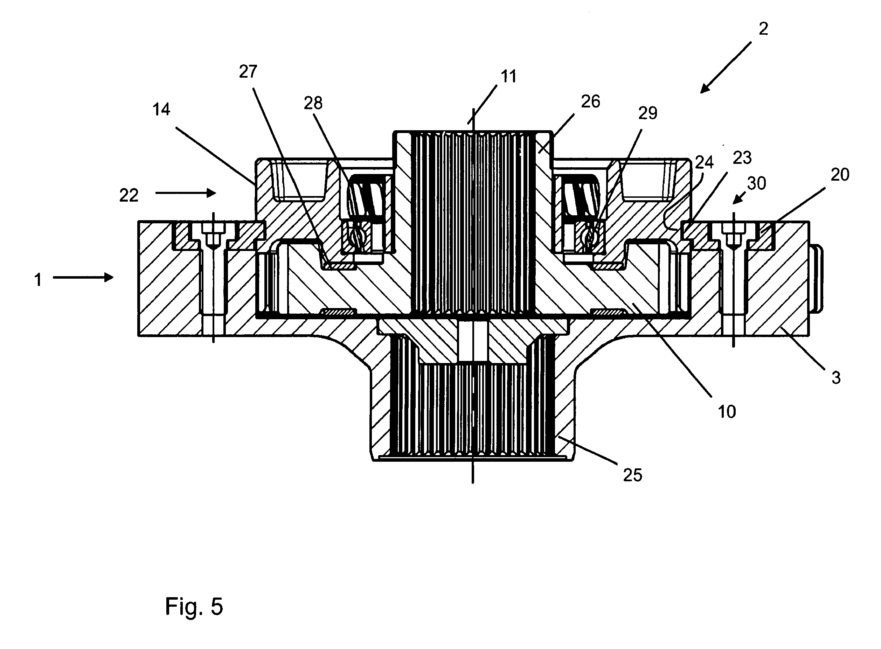

Die Figur 5 zeigt schließlich eine Schnittdarstellung der Baugruppe 2, wobei zu erkennen ist, dass an dem ersten Planetenträger 3 eine erste Nabe 25 angeformt ist. An dem ersten Sonnenrad 10 ist eine zweite Nabe 26 angeformt, welche sich durch die zweite Unterbaugruppe 22 hindurch erstreckt. Der weitere Planetenträger 14 übergreift in radialer Richtung den größten Teil des Sonnenrads 10. Zwischen Sonnenrad 10 und zweitem Planetenträger 14 kann eine Lagereinrichtung 27, zum Beispiel ausgebildet als Gleitlagerung, angeordnet sein. Auf der zweite Nabe 26 sitzt eine weitere Sonne 28, welche drehfest mit der zweiten Nabe 26 verbunden ist und relativ zu dem weiteren Planetenträger 14 über eine zweite Lagereinrichtung 29, ausgebildet als Schrägkugellager, gelagert ist.

Aus der Darstellung lässt sich die Funktion der Flanschsegmente 20 nochmals sehr gut entnehmen, welche mit ihrem Klemmbereich 23 in dieser Darstellung in einen nutähnlichen Kantenbereich 24 des weiteren Planetenträgers 14 eingreifen und diesen dadurch formschlüssig gegenüber ein Lösen in axialer Richtung zu der Axialachse 11 fixieren. Die zweite Unterbaugruppe 22 ist auf einer Montageseite 30 der ersten Unterbaugruppe 1 aufgesetzt.

### Bezugszeichenliste

- 1: erste Unterbaugruppe
- 2: Baugruppe
- 3: Planetenträger
- 4 a, b: Seitenring
- 5: Steg
- 6: Bolzenaufnahme
- 7: Planetenbolzen
- 8 a, b: Planetenräder
- 9: Montageöffnung
- 10: Sonnenrad
- 11: Axialachse
- 12: Flanschaufnahmen
- 13: Gewindebohrungen
- 14: Planetenträger der zweiten Unterbaugruppe
- 15 a, b: Seitenringe der zweiten Unterbaugruppe
- 16: Bolzenaufnahme der zweiten Unterbaugruppe
- 17: Planetenräder der zweiten Unterbaugruppe
- 18: Bolzen der zweiten Unterbaugruppe
- 19: Innendurchmesser
- 20: Flanschsegmente
- 21: Durchgangsöffnung
- 22: zweite Unterbaugruppe
- 23: Klemmbereich
- 24: Kantenbereich
- 25: Nabe
- 26: Nabe
- 27: Lagereinrichtung
- 28: Sonnenrad der zweiten Unterbaugruppe
- 29: Lagereinrichtung
- 30: Montageseite

## Patentansprüche

1. Baugruppe (2) umfassend ein Planetengetriebe,
mit einer ersten Unterbaugruppe (1), wobei die erste Unterbaugruppe (1) einen Planetenträger (3) und mindestens einen ersten Planetensatz (8a) sowie ein eine Axialachse (11) definierendes Sonnenrad (10) umfasst, wobei der erste Planetensatz (8a) an dem Planetenträger (3) auf einer Montageseite (30) der ersten Unterbaugruppe (1) gelagert ist,
mit einer zweiten Unterbaugruppe (22), wobei die zweite Unterbaugruppe (22) einen weiteren Planetenträger (14) und einen weiteren Planetensatz (17) umfasst, wobei der weitere Planetensatz (17) in dem weiteren Planetenträger (14) gelagert ist, wobei die zweite Unterbaugruppe (22) auf der Montageseite (30) der ersten Unterbaugruppe (1) angeordnet ist und wobei die zweite Unterbaugruppe (1) als eine Deckelkonstruktion zur axialen Sicherung des Sonnenrads (10) ausgebildet ist,
**dadurch gekennzeichnet, dass**
die zweite Unterbaugruppe (22) frei abstehende Flanschsegmente (20) aufweist, wobei sich die Flanschsegmente (20) in einer Radialebene zu der Axialachse (11) erstrecken, über die die zweite und die erste Unterbaugruppe (22, 1) miteinander verbunden sind, wobei die freien Enden der Flanschsegmente (20) zwischen den Planetenrädern (8a,b) der ersten Unterbaugruppe (1) angeordnet sind.

2. Baugruppe (2) nach Anspruch 1, **dadurch gekennzeichnet, dass** die Baugruppe (2) selbsthaltend ausgebildet ist.

3. Baugruppe (2) nach einem der vorhergehenden Ansprüche, **dadurch gekennzeichnet, dass** die erste Unterbaugruppe (1) zur formschlüssigen Aufnahme der Flanschsegmente (20) bezüglich einer Umlaufrichtung der Axialachse (11) und/oder in Radialrichtung zu der Axialachse (11) ausgebildet ist.

4. Baugruppe (2) nach einem der vorhergehenden Ansprüche, **dadurch gekennzeichnet, dass** die erste und die zweite Unterbaugruppe (1, 22) miteinander über die Flanschsegmente (22) lösbar verbunden sind.

5. Baugruppe (2) nach einem der vorhergehenden Ansprüche, **dadurch gekennzeichnet, dass** die Flanschsegmente (20) als separate Bauteile ausgebildet sind.

6. Baugruppe (2) nach einem der vorhergehenden Ansprüche, **dadurch gekennzeichnet dass** die Flanschsegmente (20) auf einer ersten Seite eine Durchführung (21) für eine Schraube und auf der gegenüberliegenden Seite einen Absatz (23) zur formschlüssigen Anlage an einer Kante (24) der zweiten Unterbaugruppe (22) aufweisen,

## Claims

1. Component group (2) comprising a planetary gear, with a first substructure group (1), the first substructure group (1) comprising a planet carrier (3) and at least one first planet set (8a) and also a sun wheel (10) defining an axial axis (11), the first planet set (8a) being mounted on the planet carrier (3) on a mounting side (30) of the first substructure group (1), with a second substructure group (22), the second substructure group (22) comprising a further planet carrier (14) and a further planet set (17), the further planet set (17) being mounted in the further planet carrier (14), the second substructure group (22) being arranged on the mounting side (30) of the first substructure group (1), and the second substructure group (1) being designed as a cover construction for axially securing the sun wheel (10), **characterized in that** the second substructure group (22) has freely projecting flange segments (20), the flange segments (20) extending in a radial plane with respect to the axial axis (11), via which flange segments the second and the first substructure group (22, 1) are connected to one another, the free ends of the flange segments (20) being arranged between the planet wheels (8a, b) of the first substructure group (1).

2. Component group (2) according to Claim 1, **characterized in that** the component group (2) is of the self-holding type.

3. Component group (2) according to one of the preceding claims, **characterized in that** the first substructure group (1) is designed for the positive reception of the flange segments (20) with respect to a direction of rotation of the axial axis (11) and/or in the radial direction with respect to the axial axis (11).

4. Component group (2) according to one of the preceding claims, **characterized in that** the first and the second substructure group (1, 22) are connected to one another releasably via the flange segments (22).

5. Component group (2) according to one of the preceding claims, **characterized in that** the flange segments (20) are designed as separate structural parts.

6. Component group (2) according to one of the preceding claims, **characterized in that** the flange segments (20) have, on a first side, a leadthrough (21) for a screw and, on the opposite side, a step (23) for bearing positively against an edge (24) of the second substructure group (22).

## Revendications

1. Module (2) comprenant un engrenage planétaire,
avec un premier sous-groupe (1), le premier sous-groupe (1) comprenant un porte-satellites (3) et au moins un premier train planétaire (8a) ainsi qu'une roue solaire (10) définissant un axe axial (11), le premier train planétaire (8a) étant monté sur le porte-satellites (3) sur un côté de montage (30) du premier sous-groupe (1),
avec un deuxième sous-groupe (22), le deuxième sous-groupe (22) comprenant un porte-satellites supplémentaire (14) et un train planétaire supplémentaire (17), le train planétaire supplémentaire (17) étant supporté dans le porte-satellites supplémentaire (14), le deuxième sous-groupe (22) étant disposé sur le côté de montage (30) du premier sous-groupe (1) et le deuxième sous-groupe (22) étant réalisé sous forme de construction de couvercle pour la fixation axiale de la roue solaire (10),
**caractérisé en ce que**
le deuxième sous-groupe (22) présente des segments de bride saillant librement (20), les segments de bride (20) s'étendant dans un plan radial par rapport à l'axe axial (11), par le biais duquel le deuxième et le premier sous-groupe (22, 1) sont connectés l'un à l'autre, les extrémités libres des segments de bride (20) étant disposées entre les pignons satellites (8a, b) du premier sous-groupe (1).

2. Module (2) selon la revendication 1, **caractérise en ce que** le module (2) est réalisé de manière autoportante.

3. Module (2) selon l'une quelconque des revendications précédentes, **caractérisé en ce que** le premier sous-groupe (1) est réalisé pour recevoir par engagement positif les segments de bride (20) par rapport à une direction périphérique de l'axe axial (11) et/ou dans la direction radiale par rapport à l'axe axial (11).

4. Module (2) selon l'une quelconque des revendications précédentes, **caractérisé en ce que** le premier et le deuxième sous-groupe (1, 22) sont connectés l'un à l'autre de manière desserrable par le biais des segments de bride (22).

5. Module (2) selon l'une quelconque des revendications précédentes, **caractérisé en ce que** les segments de bride (20) sont réalisés sous forme de composants séparés.

6. Module (2) selon l'une quelconque des revendications précédentes, **caractérisé en ce que** les segments de bride (20) présentent, sur un premier côté, un passage (21) pour une vis et sur le côté opposé un épaulement (23) pour l'appui par engagement positif contre une arête (24) du deuxième sous-groupe (22).
